# EUROPÄISCHE PATENTANMELDUNG

(11) **EP 4 357 055 A1**
(43) Veröffentlichungstag der Anmeldung: **24.04.2024**
(21) Anmeldenummer: 23202442.2
(22) Anmeldetag: 09.10.2023
(51) Int. Cl.: B23B 31/30, B23B 31/40, B23B 31/11, B33Y 80/00

(54) **DEHNSPANNEINRICHTUNG ZUM FIXIEREN EINES BAUTEILS**

(30) Priorität: 19.10.2022 DE 102022127520
(71) Anmelder: SCHUNK SE & Co. KG Spanntechnik Greiftechnik Automatisierungstechnik, 74348 Lauffen am Neckar (DE)
(72) Erfinder: Cantz, Nico, 74394 Hessigheim (DE)
(74) Vertreter: Paul & Albrecht Patentanwälte PartG mbB

(57) **Zusammenfassung**

Die vorliegende Erfindung betrifft eine Dehnspanneinrichtung (1) zum Fixieren eines Bauteils, insbesondere eines Werkstücks oder eines Werkzeugs an einer Werkzeugmaschine, mit
einem eine Längsachse (X) definierenden Grundkörper (2) und
einem Spannelement (5), welches eine Aufnahme mit einer radial nach innen oder nach außen weisenden Spannfläche (18) zum kraftschlüssigen Spannen des Bauteils aufweist,
wobei das Spannelement (5) von einer Vorderseite auf den Grundkörper (2) aufgesetzt oder in diesen eingesetzt ist und über zwei Gewindeverbindungen (6, 7), die unterschiedliche Nenndurchmesser aufweisen, mit dem Grundkörper (2) verbunden ist.

## Beschreibung

Die vorliegende Erfindung betrifft eine Dehnspanneinrichtung zum Fixieren eines Bauteils, insbesondere eines Werkstücks oder eines Werkzeugs an einer Werkzeugmaschine.

Dehnspanneinrichtungen sind in unterschiedlichen Ausführungsformen bekannt und werden in erster Linie eingesetzt, um einen Werkzeugschaft wie beispielsweise einen Bohrer- oder Fräserschaft in der Arbeitsspindel einer entsprechenden Werkzeugmaschine zu fixieren. Üblicherweise besitzen solche Dehnspanneinrichtungen eine Aufnahme mit einer radial nach innen oder nach außen weisenden Spannfläche zum kraftschlüssigen Spannen des Werkzeugs. Innerhalb oder außerhalb der Spannfläche ist zumeist eine Druckkammer, insbesondere eine ringförmig umlaufende Druckkammer ausgebildet. Zwischen der Druckkammer und der Spannfläche ist dabei eine dünne Wandung ausgebildet, die durch eine Erhöhung des Drucks in der Druckkammer elastisch nach innen oder nach außen verformbar ist, um eine Spannwirkung zu erzielen.

Prinzipiell unterscheidet man zwei Arten von Dehnspanneinrichtungen, nämlich zum einen sogenannte Spanndorne, bei denen die Spannfläche radial nach außen weist und sich die dünne Wandung bei Druckbeaufschlagung der Druckkammer radial nach außen aufweitet, um ein aufgesetztes Werkstück oder Werkzeug kraftschlüssig von innen zu spannen. Zum anderen können Dehnspanneinrichtungen als Spannfutter ausgebildet sein, die eine Aufnahme mit einer nach innen weisenden Spannfläche besitzen, so dass ein in die Aufnahme eingesetzter Werkzeugschaft durch eine radiale Verformung der dünnen Wandung nach innen kraftschlüssig von außen gespannt werden kann.

Zur Herstellung einer solchen Dehnspanneinrichtung wird häufig ein Grundkörper bereitgestellt, in den von vorne eine Dehnbüchse aufgesetzt wird, so dass zwischen der Dehnbüchse und dem Grundkörper die Druckkammer ausgebildet ist. Die Dehnbüchse wird dabei mit dem Grundkörper in einem vorderen axialen Endbereich und einem hinteren axialen Endbereich verlötet, um die Druckkammer zwischen dem Grundkörper und der Dehnbüchse abzudichten. Eine solche Ausgestaltung einer Dehnspanneinrichtung ist beispielsweise aus der DE 10 2010 005 844 A1 vorbekannt.

Eine solche Dehnspanneinrichtung hat sich grundsätzlich bewährt, jedoch kann zu Teilen als nachteilig angesehen werden, dass die Lötverbindungen sehr hohen Drücken in der Druckkammer nicht immer zuverlässig standhalten können.

Aufgabe der vorliegenden Erfindung ist es daher, eine alternative Dehnspanneinrichtung anzugeben, die auch hohen Drücken zuverlässig standhalten kann und insbesondere die zuvor genannten Nachteile vermeiden kann.

Diese Aufgabe ist durch eine Dehnspanneinrichtung zum Fixieren eines Bauteils, insbesondere eines Werkstücks oder eines Werkzeugs an einer Werkzeugmaschine, mit einem eine Längsachse definierenden Grundkörper und einem Spannelement, welches eine Aufnahme mit einer radial nach innen oder nach außen weisenden Spannfläche zum kraftschlüssigen Spannen des Bauteils aufweist, wobei das Spannelement von einer Vorderseite auf den Grundkörper aufgesetzt oder in diesen eingesetzt ist und über zwei Gewindeverbindungen, die unterschiedliche Nenndurchmesser aufweisen, mit dem Grundkörper verbunden ist, gelöst.

Der Erfindung liegt die grundsätzliche Überlegung zugrunde, ein als separates Bauteil ausgebildetes Spannelement über zwei Gewindeverbindungen mit dem Grundkörper zu verbinden. Jede Gewindeverbindung schafft dabei einen formschlüssigen Eingriff zwischen einem Außengewinde und einem dazu korrespondierenden Innengewinde. Dementsprechend umfasst jede Gewindeverbindung ein am Spannelement oder am Grundkörper ausgebildetes Außengewinde und ein dazu korrespondierendes, am anderen der beiden Elemente ausgebildetes Innengewinde. Der Nenndurchmesser einer Gewindeverbindung ist üblicherweise durch eine Norm definiert. Bevorzugt handelt es sich dabei um den maximalen Durchmesser des beteiligten Außengewindes, d.h. um den äußersten Durchmesser des Außengewindes.

Darüber hinaus ermöglicht es die erfindungsgemäße Dehnspanneinrichtung, einen Grundkörper und ein Spannelement als separate Bauteile zu fertigen und anschließend miteinander zu verbinden. Dadurch kann beispielsweise der Grundkörper mit konventionellen zerspanenden Fertigungsverfahren aus einem Vollmaterial gedreht werden, bzw. aus einem urgeformten Stück, beispielsweise gegossenen Werkstück, zerspanend gefertigt werden, wohingegen das Spannelement, welches eine komplexe Geometrie aufweisen kann, generativ, insbesondere mittels 3D-Druck, bevorzugt mittels selektiven Laserschmelzens gefertigt sein kann.

Generell ist gegenüber konventionellen zerspanenden Fertigungsverfahren ein generatives Fertigungsverfahren, beispielsweise 3D-Druck, bevorzugt selektives Laserschmelzen, ein eher langsameres Verfahren. Das bedeutet, dass deutlich mehr Zeit erforderlich ist, um ein Werkstück zu fertigen. Durch das separate Fertigen des Grundkörpers und des Spannelements kann trotz der komplexen Geometrie des Spannelements die Dehnspanneinrichtung effizient gefertigt werden, da lediglich das Spannelement generativ gefertigt wird und der Grundkörper besonders effizient auf konventionelle Weise hergestellt wird.

Prinzipiell kann das generative Erzeugen des Spannelements mittels eines direkten oder indirekten additiven Fertigungsverfahrens erfolgen. Beispielsweise kann als generatives bzw. additives Fertigungsverfahren das selektive Laserschmelzen eingesetzt werden. Dabei wird schichtweise Metallpulver aufgebracht und in den Bereichen, in denen ein Bauteil erzeugt werden soll, durch einen Laserstrahl aufgeschmolzen, so dass ein herzustellendes Bauteil, hier das Spannelement, schichtweise erzeugt wird. Ein alternatives Verfahren ist das selektive Elektronenstrahl-Schmelzen, welches prinzipiell ähnlich funktioniert, wobei jedoch anstelle eines Laserstrahls ein Elektronenstrahl verwendet wird. Andere beispielhafte generative oder additive Fertigungsverfahren sind das Laserauftragsschweißen, das sogenannte Wire Arc/Plasma Arc Engery Deposition-Verfahren, bei dem ein Lichtbogen oder ein Plasma-Lichtbogen zum Auftragsschweißen verwendet wird, das sogenannte Wire Feed Electron Deposition-Verfahren, bei dem zum Auftragsschweißen ein Elektronenstrahl verwendet wird. Ein weiteres mögliches additives Fertigungsverfahren ist das Metall Binder Verfahren, bei welchem Metall pulverförmig aufgebracht wird und ein in der Regel flüssiges Bindemittel aufgetragen wird, durch welches selektiv die verschiedenen Metallschichten miteinander verbunden werden. Das Metall Binder Verfahren kann ein Sintern beinhalten. Das additive Fertigungsverfahren kann auch das sogenannte Fused Deposition Modeling, auch Schmelzschichtung genannt, beinhalten, bei welchem ein Werkstück schichtweise aus einem geschmolzenen Werkstoff, beispielsweise aus einem Kunststoff oder einem metallischen Werkstoff, aufgebaut wird. Zweckmäßigerweise kann als Ausgangsmaterial ein Filament aus dem jeweiligen Material verwendet werden. Auch dieses Verfahren kann ein Sintern umfassen. Möglich ist auch, dass als additives Fertigungsverfahren Lithography- based metall manufacturing (LMM) eingesetzt wird. Hierbei wird ein photosensitives Bindemittel verwendet, um Metallpulver insbesondere schichtweise miteinander zu verbinden. Als additives Fertigungsverfahren kann auch ein Mikrogussverfahren zum Einsatz kommen. Dabei kann bevorzugt ein Werkzeug oder eine verlorene Form additiv gefertigt werden und anschließend das herzustellende Bauteil in dieser Form gegossen werden. Hierbei handelt es sich somit um ein indirektes additives Fertigungsverfahren, da nicht das herzustellende Bauteil additiv gefertigt wird, sondern ein Werkzeug bzw. eine Form zur anschließenden Herstellung des Bauteils. Demgegenüber sind direkte additive Fertigungsverfahren dadurch gekennzeichnet, dass das herzustellende Bauteil, vorliegend das Spannelement, direkt generativ erzeugt werden.

Durch das Verbinden mittels zweier Gewindeverbindungen ist es auch nicht notwendig, das Spannelement direkt auf dem bereits gefertigten Grundkörper generativ zu erzeugen. Die Herstellung kann unabhängig voneinander stattfinden, was zu einer günstigeren Maschinenauslastung beim Erzeugen des Spannelements führt.

Es können Anschlagmittel vorgesehen sein, um das Spannelement beim Aufschrauben auf, bzw. Einschrauben in den Grundkörper eindeutig zu positionieren. Diese können eine am Grundkörper ausgebildete Anschlagfläche, welche sich bevorzugt senkrecht zur Längsachse erstreckt, und eine korrespondierende, am Spannelement ausgebildete Gegenfläche umfassen, die an der Anschlagfläche anliegt.

In weiterer Ausgestaltung kann der Nenndurchmesser der größeren der beiden Gewindeverbindungen mindestens 10%, insbesondere mindestens 20%, bevorzugt mindestens 30%, besonders bevorzugt mindestens 40% größer sein als der Nenndurchmesser der kleineren der beiden Gewindeverbindungen. Eine solche Verbindung zwischen Spannelement und Grundkörper auf zwei unterschiedlichen Durchmessern führt zu einer besonders stabilen Ausgestaltung und zu guten Rundlaufeigenschaften.

Dabei können die beiden Gewindeverbindungen axial versetzt zueinander angeordnet sein. Auf diese Weise wird eine hohe Kippsteifigkeit des Spannelements und des Grundkörpers erreicht. Beim Einschrauben oder Aufschrauben des Spannelements auf den Grundkörper werden die beiden Gewindeverbindungen gleichzeitig miteinander erzeugt. Das bedeutet, dass die zu beiden Gewindeverbindungen gehörenden Gewinde, die am Spannelement bzw. am Grundkörper ausgebildet sind, die gleiche Gewindesteigung und zueinander korrespondierende Gewindeanfänge aufweisen müssen, um ein Aufschrauben oder Einschrauben des Spannelements auf bzw. in den Grundkörper zu ermöglichen.

Konkret können die Innen- und/oder Außengewinde der Gewindeverbindungen als metrische Regelgewinde oder als metrische Feingewinde oder als whitworth-Gewinde oder als Rohrgewinde oder als Trapezgewinde oder als Sägengewinde ausgebildet sein. Beispielsweise können die metrischen Regelgewinde oder Feingewinde gemäß der DIN 13-1:1999-11 oder der DIN 13-2:1999-11 ausgebildet sein. Rohrgewinde sind beispielsweise in der ISO 228-1:1994-12 oder gemäß der DIN 2999:1983-07 genormt. Ein Trapezgewinde kann insbesondere nach DIN 103-1:1977-04 ausgebildet sein. Ein Sägengewinde ist in der Norm DIN 513:1985-04 genormt.

Bevorzugt sind die Innen- und/oder Außengewinde mindestens einer, insbesondere jeder Gewindeverbindung als zylindrische Gewinde ausgebildet. AIternativ ist es auch denkbar, dass mindestens ein Gewinde einer Gewindeverbindung als konisches oder kegeliges Gewinde ausgebildet ist. Durch die Kombination eines konischen Gewindes, beispielsweise einem konischen Außengewinde, mit einem zylindrischen Gewinde, beispielsweise einem zylindrischen Innengewinde, kann gleichzeitig eine Dichtwirkung erzielt werden.

Gemäß einer bevorzugten Ausgestaltung ist das Spannelement in den Grundkörper eingeschraubt, wobei jede Gewindeverbindung ein am Spannelement ausgebildetes Außengewinde und ein dazu korrespondierendes, am Grundkörper ausgebildetes Innengewinde umfasst. Mit anderen Worten umgibt im Bereich der Gewindeverbindung der Grundkörper das Spannelement radial von außen. Auf diese Weise ergibt sich eine kompakte Bauweise des Spannelements, was zu einer günstigen und effektiven Fertigung führt.

Die erfindungsgemäße Dehnspanneinrichtung kann als Spannfutter ausgebildet sein, wobei das Spannelement eine nach vorne offene Aufnahme für ein Bauteil mit einer radial nach innen weisenden Spannfläche aufweist. Die nach innen weisende Spannfläche kann dabei durch die Wandung einer nach vorne offenen Aufnahmebohrung gebildet werden. Alternativ kann die Dehnspanneinrichtung als Spanndorn ausgebildet sein, wobei das Spannelement eine Aufnahme mit einer radial nach außen weisenden Spannfläche aufweist. In diesem Fall besitzt das zu spannende Werkstück oder Werkzeug eine zentrale Bohrung, über welche es auf den Spanndorn aufgeschoben werden kann.

Um eine Spannwirkung zu erzielen, kann gemäß einer bevorzugten Ausführungsform das Spannelement eine mit einem Hydraulikmittel beaufschlagbare Druckkammeranordnung aufweisen, wobei zwischen der Spannfläche und der Druckkammeranordnung eine dünne Wandung derart ausgebildet ist, dass sie durch Erhöhung des Drucks in der Druckkammer elastisch radial verformbar ist, um einen in die Aufnahme eingesetztes oder auf die Aufnahme aufgeschobenes Bauteil kraftschlüssig zu fixieren. Mit anderen Worten ist in diesem Fall das Spannelement massiv ausgebildet, so dass die Druckkammeranordnung vollständig innerhalb des Spannelements ausgebildet ist. Anders ausgedrückt wird die Druckkammeranordnung vollständig radial nach außen und nach innen durch das Spannelement begrenzt. Dementsprechend bildet das Spannelement bevorzugt einen vorderen Endabschnitt der Dehnspanneinrichtung und ragt insbesondere nach vorne über den Grundkörper hinaus. Die Außenkontur des Spannelements und die angrenzende Außenkontur des Grundkörpers können so gewählt sein, dass sich außen ein stetiger Übergang, insbesondere eine durchgängige konische oder kreiszylindrische Kontur ergibt.

Wenn die Dehnspanneinrichtung als Spannfutter ausgebildet ist, so besitzt die nach vorne offene Aufnahmebohrung einen Durchmesser, der geringfügig größer ist als der Durchmesser eines zu spannenden Bauteils, beispielsweise des Werkzeugschafts. Dadurch kann das Bauteil mit Spiel in die Aufnahme eingesetzt werden. Durch eine Erhöhung des Drucks in der Druckkammeranordnung wird die dünne Wandung elastisch radial nach innen verformt, so dass diese das in die Aufnahme eingesetzte Bauteil kraftschlüssig fixiert. Umgekehrt ist bei einem Spannfutter die Bohrung, mit der das zu fixierende Bauteil auf den Spanndorn aufgeschoben wird, geringfügig größer als der Außendurchmesser der Spannfläche. Durch eine Erhöhung des Drucks in der Drucckammeranordnung wird die dünne Wandung und damit auch die nach außen weisende Spannfläche radial nach außen verformt, so dass das Bauteil von innen kraftschlüssig fixiert wird.

In weiterer Ausgestaltung kann der hintere Endabschnitt des Spannelements abgestuft ausgebildet sein und die spannelementseitigen Gewindeverbindungen im hinteren Endabschnitt können auf zwei benachbarten Stufen ausgebildet sein. Somit kann das Spannelement mit seinem hinteren Endabschnitt in den Grundkörper eingeschraubt oder auf diesen aufgeschraubt sein. Bevorzugt liegt zumindest eine der beiden Gewindeverbindungen axial hinter der Druckkammeranordnung. In diesem Fall kann das Spannelement den vorderen Endabschnitt der Dehnspanneinrichtung bilden.

Gemäß einer alternativen Ausgestaltung kann das Spannelement als Dehnbüchse ausgebildet sein, die unter Bildung einer geschlossenen Druckkammeranordnung in den Grundkörper eingeschraubt oder auf diesen aufgeschraubt ist, wobei die Druckkammeranordnung unter elastischer Verformung des Spannelements mit einem Hydraulikmittel beaufschlagbar ist, um eine Spannwirkung zu erzielen. Dieser Ausgestaltung liegt die Überlegung zugrunde, in an sich bekannter Weise das Spannelement als Dehnbüchse auszugestalten und diese in den Grundkörper einzusetzen bzw. auf diesen aufzusetzen, wobei zwischen dem Grundkörper und dem Spannelement die Drucckammeranordnung ausgebildet ist, so dass das Spannelement radial nach innen oder nach außen verformbar ist, wenn der Druck in der Druckkammeranordnung erhöht wird, um eine Spannwirkung zu erzielen. Das Spannelement bildet in diesem Fall eine dünne Wandung, die durch eine Erhöhung des Drucks in der Druckkammeranordnung elastisch verformbar ist, um ein Bauteil kraftschlüssig zu fixieren.

Bevorzugt ist dabei die Druckkammeranordnung axial zwischen den beiden Gewindeverbindungen angeordnet. Mit anderen Worten kann vorgesehen sein, dass eine der beiden Gewindeverbindungen axial vor der Druckkammeranordnung und die andere der beiden Gewindeverbindungen axial hinter der Druckkammeranordnung angeordnet ist. Dadurch wird die Druckkammeranordnung nach vorne und nach hinten durch die beiden Gewindeverbindungen begrenzt.

Benachbart zu mindestens einer Gewindeverbindung kann in dem Grundkörper eine zu der Druckkammeranordnung hin offene, insbesondere ringförmig umlaufende Vertiefung ausgebildet sein. Die Vertiefung ist bevorzugt derart ausgebildet und/oder positioniert, dass zwischen der Vertiefung und der Gewindeverbindung eine dünne Wand gebildet ist, die zumindest an ihrem drucckammerseitigen Ende durch den in der Vertiefung herrschenden Druck elastisch gegen den Bereich der Gewindeverbindung gedrückt wird.

Prinzipiell kann die Druckkammeranordnung eine ringförmig umlaufende Druckkammer oder über den Umfang verteilt mehrere, insbesondere genau drei, fluidisch miteinander verbundene Druckkammerabschnitte umfassen. Um den Druck in der Druckkammeranordnung zu verändern, kann die Drucckammeranordnung in einen Hydraulikmittelzuführkanal münden, der an seiner von der Druckkammer fernen Seite durch Spannmittel verschlossen ist. Konkret können die Spannmittel eine Spannschraube umfassen, die mit einem im Hydraulikmittelzuführkanal verschiebbar angeordneten Spannkolben verbunden oder einteilig mit diesem ausgebildet ist, so dass der Spannkolben durch Drehen der Spannschraube unter Erhöhung des Drucks in der Druckkammer verschiebbar ist.

Insbesondere wenn das Spannelement massiv ausgebildet ist und eine mit einem Hydraulikmittel beaufschlagbare Druckkammeranordnung aufweist, kann der Hydraulikmittelzuführkanal angrenzend an die Druckkammeranordnung einen spannelementseitigen Kanalabschnitt, der sich ausgehend von der Druckkammeranordnung in dem Spannelement erstreckt und in einen zwischen dem Spannelement und dem Grundkörper ausgebildeten Zwischenraum mündet, und einen grundkörperseitigen Kanalabschnitt aufweisen, der sich ausgehend von dem Zwischenraum in den Grundkörper in Richtung der Spannmittel erstreckt. Dieser Ausgestaltung liegt die Überlegung zugrunde, dass die Druckkammeranordnung fluidisch mit den Spannmitteln verbunden sein muss. Da die Druckkammeranordnung in dem Spannelement enthalten ist, wird zunächst eine fluidische Verbindung zu einem Zwischenraum zwischen Spannelement und Grundkörper realisiert und, ausgehend von dem Zwischenraum, eine fluidische Verbindung innerhalb des Grundkörpers zu den Spannmitteln hin.

In konkreter Ausgestaltung können der spannelementseitige Kanalabschnitt und/oder der grundkörperseitige Kanalabschnitt durch sich in Längsrichtung erstreckende Bohrungen gebildet sein. Solche Bohrungen können auf einfache Weise bei der Herstellung des Grundkörpers und des Spannelements erzeugt werden.

In weiterer Ausgestaltung kann der Zwischenraum radial und/oder axial zwischen den beiden Gewindeverbindungen ausgebildet sein. Mit anderen Worten kann der Zwischenraum zu beiden Seiten hin, d.h. radial nach innen bzw. nach außen und axial, d.h. nach vorne und nach hinten, durch die beiden Gewindeverbindungen begrenzt sein. Da die beiden Gewindeverbindungen unterschiedliche Nenndurchmesser haben, ist genügend Raum vorhanden, so dass der spannelementseitige Kanalabschnitt bzw. der grundkörperseitige Kanalabschnitt jeweils in den Zwischenraum münden können. Bevorzugt ist der Zwischenraum ringförmig umlaufend zwischen dem Grundköper und dem Spannelement ausgebildet.

Insbesondere in dem Fall, dass das Spannelement als Dehnbüchse ausgebildet ist, kann der Hydraulikmittelzuführkanal im Grundkörper ausgebildet sein und insbesondere schräg nach vorne in die Druckkammeranordnung münden. Da in diesem Fall das Spannelement als Dehnbüchse ausgebildet ist und die Druckkammeranordnung lediglich radial nach innen oder nach außen begrenzt, kann in diesem Fall der Hydraulikmittelzuführkanal vollständig im Grundkörper verlaufen.

Ferner können Dichtmittel vorgesehen sein, um die Druckkammeranordnung und/oder den Hydraulikmittelzuführkanal abzudichten. Beispielsweise können die Gewindeverbindungen derart ausgestaltet sein, dass sie eine Dichtwirkung besitzen.

Konkret können das Spannelement und der Grundkörper im Bereich ihrer Gewindeverbindungen stoffschlüssig, insbesondere durch eine Lötverbindung, bevorzugt durch eine Hochtemperatur-Lötverbindung, miteinander verbunden sein. Mit anderen Worten kann vorgesehen sein, zusätzlich zu der formschlüssigen Verbindung der beiden Teile über die miteinander in Eingriff stehenden Gewinde noch eine stoffschlüssige Verbindung auszubilden. Zum einen wird auf diese Art verhindert, dass sich das Spannelement vom Grundkörper lösen kann, wenn beispielsweise in der Maschine bei der Bearbeitung eines Werkstücks Vibrationen auftreten. Zum anderen führt eine solche stoffschlüssige Verbindung zu einer Abdichtung im Bereich der Gewindeverbindungen, so dass das Druckmittel aus der Druckkammeranordnung bzw. aus dem Hydraulikmittelzuführkanal nicht entweichen kann. Alternativ oder ergänzend zu einer stoffschlüssigen Verbindung ist auch denkbar, andere Dichtmittel, beispielsweise in Form von Dichtringen in der Umgebung, d.h. benachbart zu den Gewindeverbindungen vorzusehen. Die Dichtmittel können auch insbesondere konisch ausgebildete, zueinander korrespondierende Dichtflächen an dem Grundkörper und dem Spannelement umfassen, die durch Anlage aneinander zu verhindern, dass Druckmittel entweichen kann. Das Spannelement und der Grundkörper können auch miteinander verpresst sein und/oder durch Einschrumpfen des Spannelements am Grundkörper so miteinander verbunden sein, dass ein Entweichen des Druckmittels verhindert wird.

Angrenzend an jede Gewindeverbindung kann im Grundkörper oder im Spannelement eine Ringnut ausgebildet sein, in der Lötmaterial, insbesondere CU-Lötmaterial, untergebracht ist. Eine solche Anordnung ermöglicht ein besonders einfaches Fügen der beiden Bauteile miteinander. Denn vor dem Ein- oder Aufschrauben des Spannelements auf bzw. in den Grundkörper kann in die entsprechenden Ringnuten Lötmaterial eingesetzt werden. Nach dem Einschrauben bzw. Aufschrauben kann dann die komplette Dehnspanneinrichtung in einem Ofen platziert werden und erhitzt werden, bis das Lötmaterial in den Ringnuten schmilzt. Da das Lötmaterial in unmittelbarer Nähe der Gewindeverbindungen angeordnet ist, wird es durch die Kapillarwirkung in den Spalt zwischen dem jeweiligen Innen- und Außengewinde gezogen. Die Menge des bereitgestellten Lötmaterials ist dabei so gewählt, dass bevorzugt die Gewinde über ihre gesamte Länge benetzt werden, so dass sich die Lötverbindung über die gesamte Gewindelänge erstreckt. Auf diese Weise wird eine abdichtende Wirkung erzielt.

Alternativ zu einer Lötverbindung kann auch eine andere stoffschlüssige Verbindung, beispielsweise eine Klebeverbindung im Bereich der Gewindeverbindungen vorgesehen sein.

Der Grundkörper kann an seinem endseitigen Endbereich eine Maschinenschnittstelle zum Anbringen an der Spindel einer Werkzeugmaschine aufweisen. Der Grundkörper kann auch einen Greiferflansch aufweisen, wobei das Spannelement bevorzugt in einem axial vor dem Greiferflasch angeordneten, gegenüber dem Greiferflasch verjüngten Bereich der Dehnspanneinrichtung angeordnet ist.

Hinsichtlich weiterer vorteilhafter Ausgestaltungen wird auf die Unteransprüche sowie die nachfolgende Beschreibung von Ausführungsbeispielen unter Bezugnahme auf die beiliegende Zeichnung verwiesen. In der Zeichnung zeigen:
- Figur 1: eine erste Ausführungsform einer erfindungsgemäßen Dehnspanneinrichtung in einer teilweise geschnittenen Seitenansicht;
- Figur 2: den vorderen Endbereich der Dehnspanneinrichtung aus Figur 1 in einer Längsschnittansicht;
- Figur 3: den Grundkörper der Dehnspanneinrichtung aus Figur 1 in einer teilweise geschnittenen Seitenansicht;
- Figur 4: das Spannelement der Dehnspanneinrichtung aus Figur 1 in einer Längsschnittansicht;
- Figur 5: eine zweite Ausführungsform einer erfindungsgemäßen Dehnspanneinrichtung ein einer teilweise geschnittenen Seitenansicht;
- Figur 6: den vorderen Endbereich der Dehnspanneinrichtung aus Figur 5 in einer Längsschnittansicht;

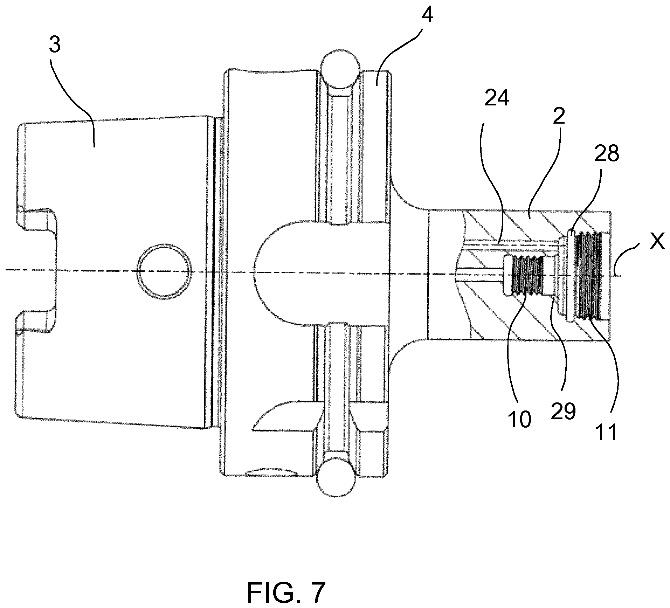

- Figur 7: den Grundkörper der Dehnspanneinrichtung aus Figur 5 in einer teilweise geschnittenen Seitenansicht;

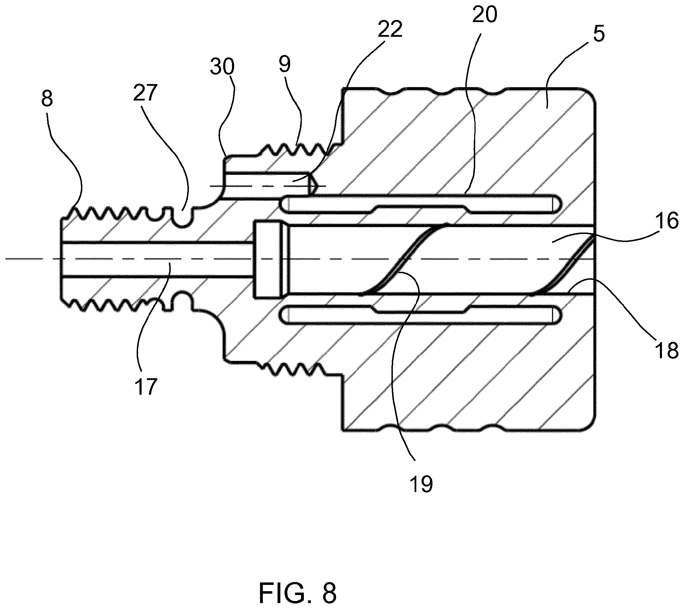

- Figur 8: das Spannelement der Dehnspanneinrichtung aus Figur 5 in einer Längsschnittansicht;
- Figur 9: eine dritte Ausführungsform einer erfindungsgemäßen Dehnspanneinrichtung in einer teilweise geschnittenen Seitenansicht;

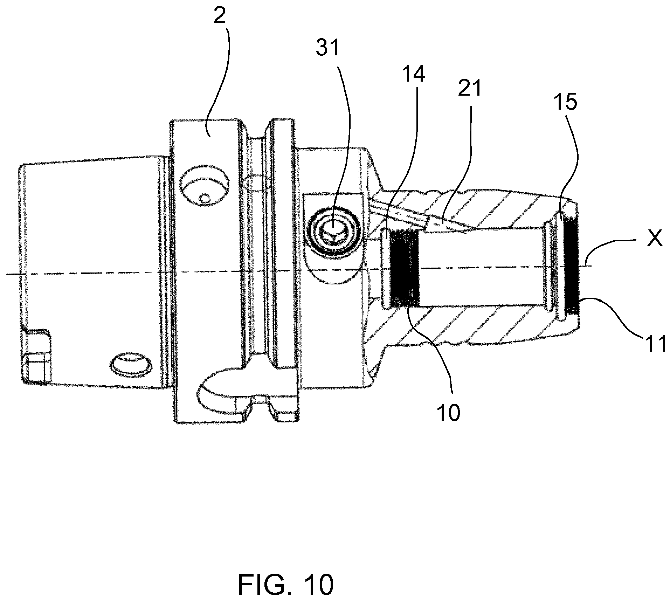

- Figur 10: den Grundkörper der Dehnspanneinrichtung auf Figur 9 in einer teilweise geschnittenen Seitenansicht; und

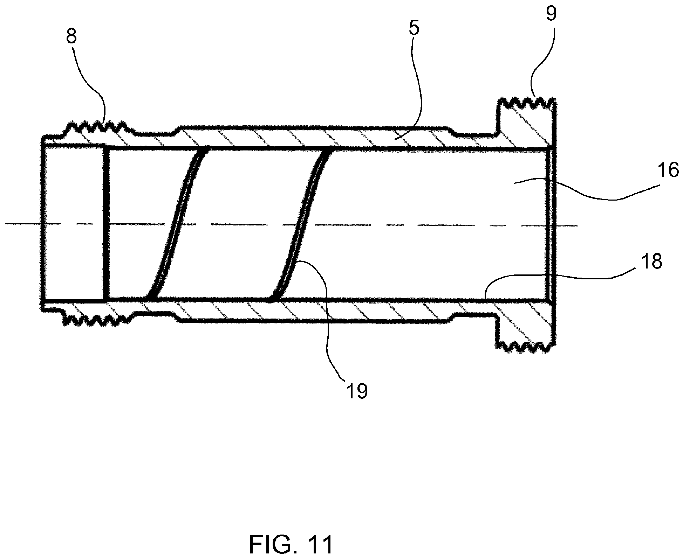

- Figur 11: das Spannelement der Dehnspanneinrichtung aus Figur 9 einer Längsschnittansicht.

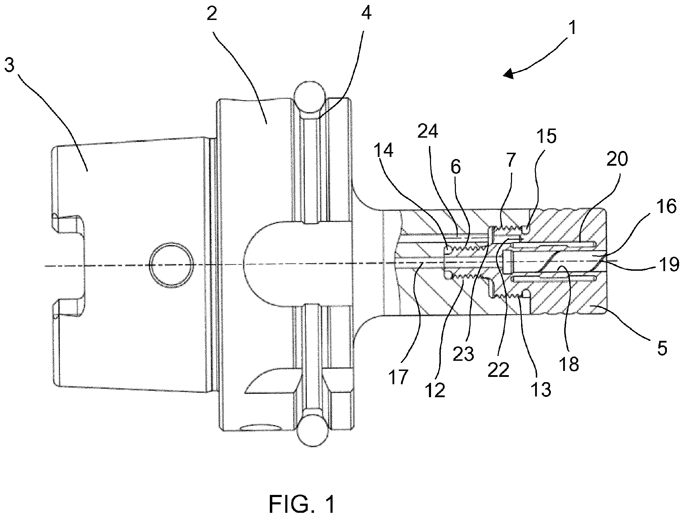

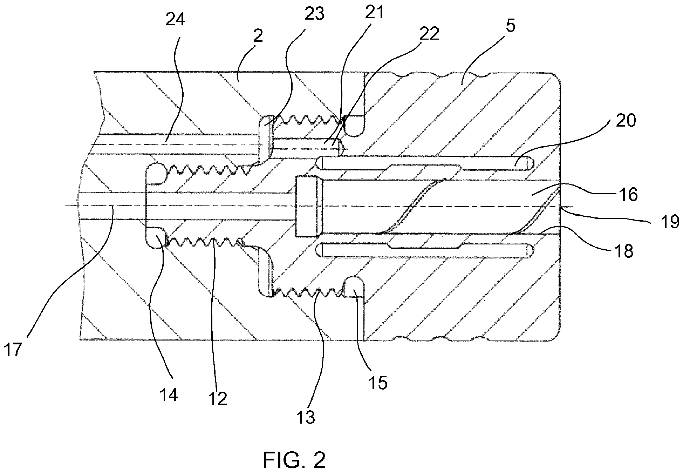

Die Figuren 1 und 2 zeigen eine als Spannfutter ausgebildete Dehnspanneinrichtung 1 gemäß der vorliegenden Erfindung. Die Dehnspanneinrichtung 1 besitzt einen Grundkörper 2, der eine Längsachse X definiert und an seinem rückseitigen Endbereich eine als Hohlschaftkegel (HSK) ausgebildete Maschinenschnittstelle 3 aufweist. Axial vor der Maschinenschnittstelle 3 ist ein Greiferflansch 4 angeordnet, wobei der axial vor dem Greiferflansch 4 liegende Bereich gegenüber diesem verjüngt ausgebildet ist.

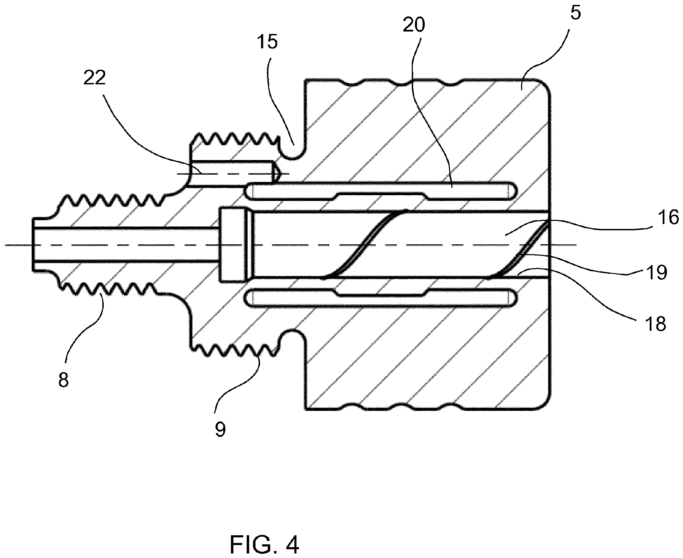

Von vorne ist ein Spannelement 5 in den Grundkörper 2 eingesetzt und über zwei Gewindeverbindungen 6, 7 mit dem Grundkörper 2 formschlüssig verbunden. Konkret ist der hintere axiale Endabschnitt des Spannelements 5 abgestuft ausgebildet, wobei auf zwei benachbarten Stufen jeweils ein Außengewinde 8, 9 der beiden Gewindeverbindungen 6, 7 ausgebildet ist. Das Spannelement 5 ist im Detail in der Figur 4 dargestellt.

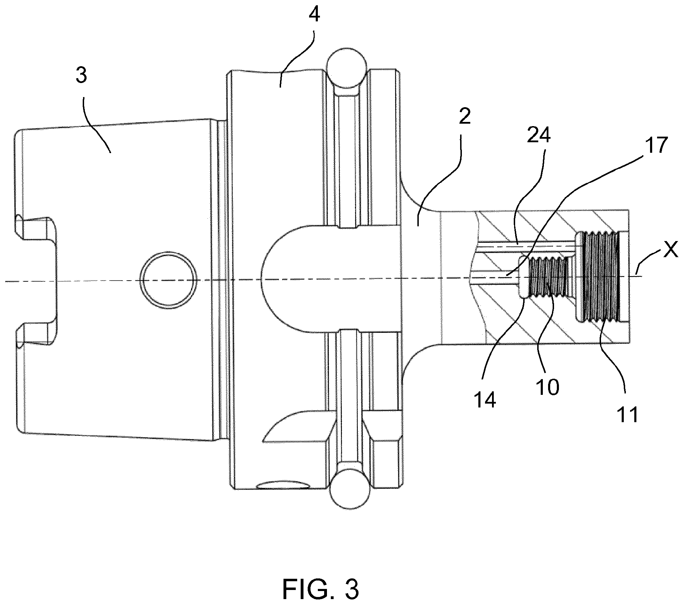

Wir der Figur 3 zu entnehmen ist, besitzt der Grundkörper 2 dazu korrespondierende Innengewinde 10, 11. Die beiden Außengewinde 8, 9 und die beiden Innengewinde 10, 11 sind vorliegend jeweils als zylindrisch, metrische Feingewinde nach DIN 13-2 ausgebildet.

Die beiden Gewindeverbindungen 6, 7 haben somit unterschiedliche Nenndurchmesser, wobei der Nenndurchmesser der größeren, vorderen Gewindeverbindung 7 etwa doppelt so groß ist wie der Nenndurchmesser der hinteren, kleineren Gewindeverbindung 6. Die Gewinde beider Gewindeverbindungen 6, 7 haben dabei die gleiche Gewindesteigung. Ferner sind die Gewindeanfänge der zu beiden Gewindeverbindungen 6, 7 gehörenden Innen- bzw. Außengewinde derart aufeinander abgestimmt, dass ein problemloses Einschrauben möglich ist.

Zusätzlich zu den formschlüssigen Gewindeverbindungen 6, 7 sind das Spannelement 5 und der Grundkörper 2 im Bereich ihrer Gewindeverbindungen 6, 7 auch stoffschlüssig, vorliegend durch eine Hochtemperatur-Lötverbindung 12, 13 miteinander verbunden. Zur Herstellung der Lötverbindung 12 ist hinter der hinteren Gewindeverbindung 6 im Grundkörper 2 eine Ringnut 14 ausgebildet, die gleichzeitig als Gewindefreistich dient. Ferner ist im Spannelement 5 axial vor der vorderen Gewindeverbindung 7 eine Ringnut 15 ausgebildet, die ebenfalls gleichzeitig als Gewindefreistich fungiert. In die beiden Ringnuten 14, 15 ist Lötmaterial, welches in den Figuren nicht dargestellt ist, eingesetzt, so dass zum Erzeugen der stoffschlüssigen Verbindung der Grundkörper 2 und das Spannelement 5 in einem Ofen platziert und aufgewärmt wird, bis das Lötmaterial schmilzt. Dabei zieht sich das Lötmaterial durch die Kapillarwirkung in den Spalt zwischen dem Außengewinde 8, 9 und dem korrespondierenden Innengewinde 10, 11, so dass jeweils eine stoffschlüssige Lötverbindung 12, 13 entsteht.

Zur Aufnahme eines Werkzeugschafts ist in dem Spannelement eine nach vorne offene Aufnahmebohrung 16 ausgebildet. In diese mündet von hinten eine axiale Durchgangsbohrung 17, die den gesamten Grundkörper 2 axial durchsetzt, um Kühlmittel von hinten einem in die Aufnahmebohrung 16 eingesetzten Werkzeug zuführen zu können. Die Aufnahmebohrung 16 besitzt eine radial nach innen weisende Spannfläche 18, in der eine wendelförmige, als Schmutzrille dienende Nut 19 ausgebildet ist. Der Durchmesser der Aufnahmebohrung 16 ist dabei geringfügig größer als der Durchmesser eines zu spannenden Werkzeugschafts.

Das Spannelement 5 weist eine mit einem Hydraulikmittel beaufschlagbare Druckkammeranordnung 20 auf, welche eine ringförmig umlaufende Drucckammer umfasst. Zwischen der Spannfläche 18 und der Druckkammeranordnung 20 ist eine dünne Wandung derart ausgebildet, dass sie durch eine Erhöhung des Drucks in der Druckkammeranordnung 20 elastisch radial nach innen verformbar ist, um ein in die Aufnahmebohrung 16 eingesetztes Bauteil kraftschlüssig zu fixieren.

Die Druckkammeranordnung 20 mündet in einen Hydraulikmittelzuführkanal 21. Angrenzend an die Druckkammeranordnung 20 besitzt der Hydraulikmittelzuführkanal 21 einen spannelementseitigen Kanalabschnitt 22, der in einen zwischen dem Spannelement 5 und dem Grundkörper 2 ausgebildeten Zwischenraum 23 mündet. Dieser Zwischenraum 23 ist radial und axial zwischen den beiden Gewindeverbindungen 6, 7 ausgebildet und verläuft ringförmig umlaufend zwischen dem Grundkörper 2 und dem Spannelement 5. An den Zwischenraum 23 schließt sich ein grundkörperseitiger Kanalabschnitt 24 an, der sich ausgehend von dem Zwischenraum 23 in den Grundkörper 2 erstreckt. Sowohl der spannelementseitige Kanalabschnitt 22, als auch der an den Zwischenraum 23 angrenzende grundkörperseitige Kanalabschnitt 24 werden durch sich in Längsrichtung erstreckende Bohrungen gebildet.

An seiner von der Druckkammeranordnung 20 fernen Seite ist der Hydraulikmittelzuführkanal 21 durch Spannmittel verschlossen. Diese sind in den Figu-ren 1 bis 4 nicht im Detail dargestellt, umfassen jedoch eine Spannschraube, die mit einem im Hydraulikmittelzuführkanal 21 verschiebbar angeordneten Spannkolben verbunden oder einteilig mit diesem ausgebildet ist, so dass der Spannkolben durch Drehen der Spannschraube unter Erhöhung des Drucks in der Druckkammeranordnung 20 verschiebbar ist.

Durch die zusätzlichen Lötverbindungen 12, 13 im Bereich der Gewindeverbindungen 6, 7 wird der Zwischenraum 23 zuverlässig nach außen abgedichtet, so dass kein Hydraulikmittel aus dem Hydraulikmittelzuführkanal 21 und der Druckkammeranordnung 20 nach außen entweichen kann.

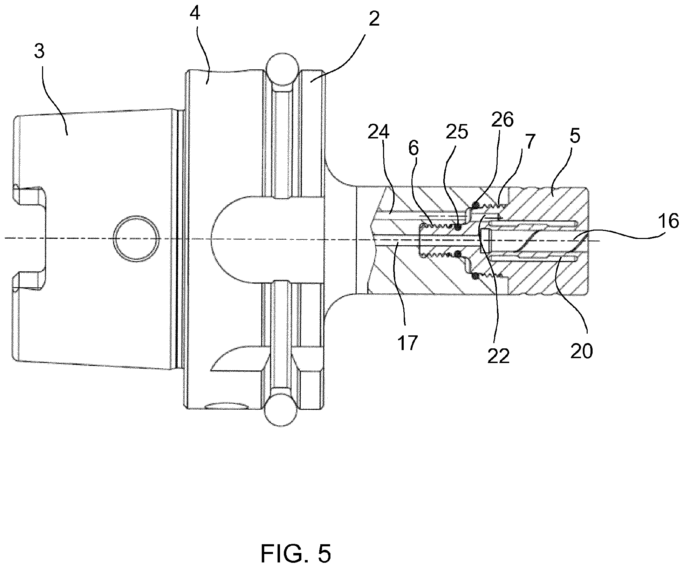

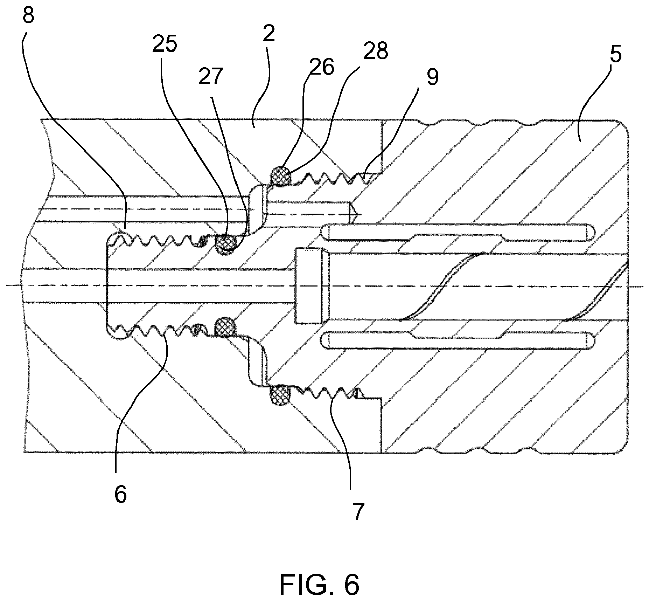

Die Figuren 5 und 6 zeigen eine ebenfalls als Spannfutter ausgebildete Dehnspanneinrichtung 1 gemäß der vorliegenden Erfindung. Diese ist weitestgehend identisch mit der in den Figuren 1 und 2 dargestellten Dehnspanneinrichtung 1. Allerdings ist im Bereich der beiden Gewindeverbindungen 6, 7 keine Lötverbindung vorgesehen. Die Abdichtung des Zwischenraums 23 erfolgt durch Dichtringe 25, 26, wobei einer der beiden Dichtringe 25 in eine vor dem hinteren Gewinde 8 angeordnete, im Spannelement 5 ausgebildete Dichtringnut 27 eingesetzt ist und ein weiterer Dichtring 26 hinter dem Innengewinde 11 der größeren Gewindeverbindung 7 in eine umlaufende Dichtringnut 28 im Grundkörper 2 eingesetzt ist. Um die beiden Dichtringe 25, 26 beim Einschrauben des Spannelements 5 in den Grundkörper 2 nicht zu beschädigen, sind entsprechende Montagefasen 29, 30 am Spannelement 5 bzw. am Grundkörper 2 vorgesehen. Entsprechend sind weder am Spannelement 5, noch am Grundkörper 2 entsprechende Ringnuten zur Aufnahme von Lötmaterial ausgebildet.

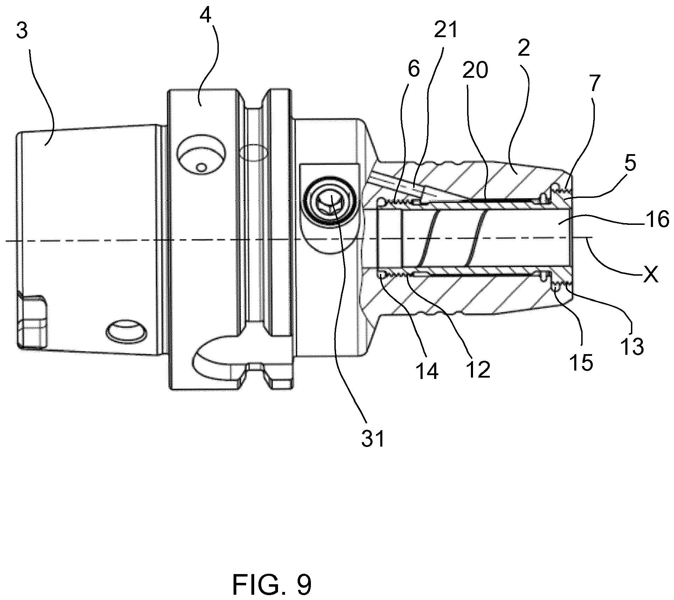

In der Figur 9 ist eine ebenfalls als Spannfutter ausgebildete erfindungsgemäße Dehnspanneinrichtung 1 dargestellt. Diese besitzt ebenfalls einen eine Längsachse definierenden Grundkörper 2 und einen von der Vorderseite in den Grundkörper 2 eingesetztes, vorliegend als Dehnbüchse ausgebildetes Spannelement 5. Die Dehnbüchse ist dabei unter Bildung einer geschlossenen Druckkammeranordnung 20 in den Grundkörper 2 eingeschraubt. Über zwei Gewindeverbindungen 6, 7, die unterschiedliche Nenndurchmesser aufweisen, ist das Spannelement 5 mit dem Grundkörper 2 formschlüssig verbunden.

Eine der beiden Gewindeverbindungen 6 ist dabei axial hinter der Druckkammeranordnung 20 angeordnet, wohingegen die andere Gewindeverbindung 7 axial vor der Druckkammeranordnung 20 angeordnet ist. Die vordere, größere der beiden Gewindeverbindungen 7 hat dabei einen um etwa 15 % größeren Nenndurchmesser als die kleinere der beiden Gewindeverbindungen 6.

Im Bereich der beiden Gewindeverbindungen 6, 7 sind das Spannelement 5 und der Grundkörper 2 jeweils durch eine Hochtemperatur-Lötverbindung 12, 13 stoffschlüssig miteinander verbunden. Dazu ist angrenzend an jede Gewindeverbindung 6, 7 im Grundkörper 2 jeweils eine Ringnut 14, 15 ausgebildet, in der Lötmaterial (nicht dargestellt) untergebracht ist. Die Ringnuten 14, 15 sind jeweils axial hinter den beiden Außengewinden 8, 9 angeordnet und bilden gleichzeitig einen Gewindefreistich für das jeweilige Außengewinde 8, 9. Durch die Lötverbindungen 12, 13 wird gleichzeitig die Druckkammeranordnung 20 nach vorne und nach hinten abgedichtet.

Die Druckkammeranordnung 20, welche vorliegend ebenfalls eine ringförmig umlaufende Druckkammer umfasst, mündet in einen Hydraulikmittelzuführkanal 21, der vorliegend schräg nach vorne im Grundkörper 2 verläuft.

Wie auch bei den zuvor beschriebenen Ausführungsbeispielen ist der Hydraulikmittelzuführkanal 21 an seiner von der Druckkammeranordnung 20 fernen Seite durch Spannmittel verschlossen. Diese umfassen vorliegend ebenfalls eine Spannschraube 31, die mit einem im Hydraulikmittelzuführkanal 21 verschiebbar angeordnete Spannkolben verbunden ist, so dass der Spannkolben durch Drehen der Spannschraube 31 und der Erhöhung des Drucks in der Druckkammeranordnung 20 verschiebbar ist.

Sämtliche beschriebenen Ausführungsbeispiele haben gemeinsam, dass durch die beiden Gewindeverbindungen 6, 7, die unterschiedliche Nenndurchmesser aufweisen, eine sehr stabile, formschlüssige Verbindung zwischen dem Spannelement 5 und dem Grundkörper 2 ermöglicht wird. Zusätzlich sind Dichtmittel vorgesehen, um im Bereich der Gewindeverbindungen 6, 7 oder angrenzend an diese den Hydraulikmittelzuführkanal 21 bzw. die Druckkammeranordnung 20 abzudichten und einen Austritt des Hydraulikmittels zu verhindern. Diese können als Lötverbindungen 12, 13 ausgebildet sein, so dass zusätzlich zu den formschlüssigen Eingriffen in den Gewindeverbindungen 6, 7 noch stoffschlüssige Verbindungen geschaffen werden.

Bei den ersten beiden Ausführungsformen ist das Spannelement 5 massiv gefertigt und enthält vollständig die Druckkammeranordnung 20. Es bildet im Prinzip den vorderen axialen Endbereich der Dehnspanneinrichtung 1. Das Spannelement 5 kann in beiden Fällen platzsparend generativ erzeugt werden, wohingegen der Grundkörper 2 auf effektive Weise durch spanende Bearbeitungsverfahren aus Vollmaterial hergestellt werden kann, bevor die beiden Teile durch die beiden Gewindeverbindungen 6, 7 stabil miteinander verbunden werden. Dadurch wird eine besonders effiziente Fertigung der erfindungsgemäßen Dehnspanneinrichtung 1 ermöglicht.

### Bezugszeichenliste

- 1: Dehnspanneinrichtung
- 2: Grundkörper
- 3: Maschinenschnittstelle
- 4: Greiferflansch
- 5: Spannelement
- 6: Gewindeverbindung
- 7: Gewindeverbindung
- 8: Außengewinde
- 9: Außengewinde
- 10: Innengewinde
- 11: Innengewinde
- 12: Lötverbindung
- 13: Lötverbindung
- 14: Ringnut
- 15: Ringnut
- 16: Aufnahmebohrung
- 17: axiale Durchgangsbohrung
- 18: Spannfläche
- 19: wendelförmige Nut
- 20: Druckkammeranordnung
- 21: Hydraulikmittelzuführkanal
- 22: spannelementseitiger Kanalabschnitt
- 23: Zwischenraum
- 24: grundkörperseitiger Kanalabschnitt
- 25: Dichtring
- 26: Dichtring
- 27: Dichtringnut
- 28: Dichtringnut
- 29: Montagefase
- 30: Montagefase
- 31: Spannschraube
- X: Längsachse

## Patentansprüche

1. Dehnspanneinrichtung (1) zum Fixieren eines Bauteils, insbesondere eines Werkstücks oder eines Werkzeugs an einer Werkzeugmaschine, mit
einem eine Längsachse (X) definierenden Grundkörper (2) und
einem Spannelement (5), welches eine Aufnahme mit einer radial nach innen oder nach außen weisenden Spannfläche (18) zum kraftschlüssigen Spannen des Bauteils aufweist,
wobei das Spannelement (5) von einer Vorderseite auf den Grundkörper (2) aufgesetzt oder in diesen eingesetzt ist und über zwei Gewindeverbindungen (6, 7), die unterschiedliche Nenndurchmesser aufweisen, mit dem Grundkörper (2) verbunden ist.

2. Dehnspanneinrichtung (1) nach Anspruch 1, **dadurch gekennzeichnet, dass** der Nenndurchmesser der größeren der beiden Gewindeverbindungen (6, 7) mindestens 10%, insbesondere mindestens 20%, bevorzugt mindestens 30%, besonders bevorzugt mindestens 40 % größer ist als der Nenndurchmesser der kleineren der beiden Gewindeverbindungen (6, 7), und/oder dass die beiden Gewindeverbindungen (6, 7) axial versetzt zueinander angeordnet sind, und/oder dass die Innen- und/oder Außengewinde (10, 11, 8, 9) der Gewindeverbindungen (6, 7) als metrische Regelgewinde oder als metrische Feingewinde oder als Whitworth- Gewinde oder als Rohrgewinde oder als Trapezgewinde oder als Sägengewinde ausgebildet sind, und/oder **dass** die Innen- und/oder Außengewinde (10, 11, 8, 9) mindestens einer, insbesondere jeder Gewindeverbindung (6, 7) als zylindrische Gewinde ausgebildet sind, und/oder **dass** mindestens ein Gewinde einer Gewindeverbindung (6, 7) als konisches oder kegeliges Gewinde ausgebildet ist.

3. Dehnspanneinrichtung (1) nach einem der vorherigen Ansprüche, **dadurch gekennzeichnet, dass** das Spannelement (5) in den Grundkörper (2) eingeschraubt ist und jede Gewindeverbindung (6, 7) ein am Spannelement (5) ausgebildetes Außengewinde (8, 9) und ein dazu korrespondierendes, am Grundkörper (2) ausgebildetes Innengewinde (10, 11) umfasst.

4. Dehnspanneinrichtung (1) nach einem der vorherigen Ansprüche, **dadurch gekennzeichnet, dass** diese als Spannfutter ausgebildet ist und das Spannelement (5) eine nach vorne offene Aufnahme für ein Bauteil mit einer radial nach innen weisenden Spannfläche (18) aufweist, oder dass diese als Spanndorn ausgebildet ist und das Spannelement (5) eine Aufnahme mit einer radial nach außen weisenden Spannfläche (18) aufweist.

5. Dehnspanneinrichtung (1) nach einem der vorherigen Ansprüche, **dadurch gekennzeichnet, dass** das Spannelement (5) eine mit einem Hydraulikmittel beaufschlagbare Druckkammeranordnung (20) aufweist, wobei zwischen der Spannfläche (18) und der Druckkammeranordnung (20) eine dünne Wandung derart ausgebildet ist, dass sie durch Erhöhung des Drucks in der Druckkammer elastisch radial verformbar ist, um ein in die Aufnahme eingesetztes oder auf die Aufnahme aufgeschobenes Bauteil kraftschlüssig zu fixieren.

6. Dehnspanneinrichtung (1) nach Anspruch 5, **dadurch gekennzeichnet, dass** der hintere Endabschnitt des Spannelements (5) abgestuft ausgebildet ist und die spannelementseitigen Gewinde der Gewindeverbindungen (6, 7) im hinteren Endabschnitt auf zwei benachbarten Stufen ausgebildet sind, und/oder dass zumindest eine der beiden Gewindeverbindungen (6, 7) axial hinter der Druckkammeranordnung (20) liegt.

7. Dehnspanneinrichtung (1) nach einem der Ansprüche 1 bis 5, **dadurch gekennzeichnet, dass** das Spannelement (5) als Dehnbüchse ausgebildet ist, die unter Bildung einer geschlossenen Druckkammeranordnung (20) in den Grundkörper (2) eingeschraubt oder auf diesen aufgeschraubt ist, wobei die Druckkammeranordnung (20) unter elastischer Verformung des Spannelements (5) mit einem Hydraulikmittel beaufschlagbar ist, um eine Spannwirkung zu erzielen, wobei, insbesondere, die Druckkammeranordnung (20) axial zwischen den beiden Gewindeverbindungen (6, 7) angeordnet ist.

8. Dehnspanneinrichtung (1) nach einem der Ansprüche 5 bis 7, **dadurch gekennzeichnet, dass** die Druckkammeranordnung (20) eine ringförmig umlaufende Druckkammer oder über den Umfang verteilt mehrere, insbesondere genau drei, fluidisch miteinander verbundene Druckkammerabschnitte umfasst.

9. Dehnspanneinrichtung (1) nach Anspruch 8, **dadurch gekennzeichnet, dass** die Druckkammeranordnung (20) in einen Hydraulikmittelzuführkanal (21) mündet, der an seiner von der Druckkammeranordnung (20) fernen Seite durch Spannmittel verschlossen ist, wobei, insbesondere, die Spannmittel eine Spannschraube (31) umfassen, die mit einem im Hydraulikmittelzuführkanal (21) verschiebbar angeordneten Spannkolben verbunden oder einteilig mit diesem ausgebildet ist, so dass der Spannkolben durch Drehen der Spannschraube (31) unter Erhöhung des Drucks in der Druckkammeranordnung (20) verschiebbar ist.

10. Dehnspanneinrichtung (1) nach Anspruch 9 und nach einem der Ansprüche 5 bis 6, **dadurch gekennzeichnet, dass** der Hydraulikmittelzuführkanal (21) angrenzend an die Druckkammeranordnung (20) einen spannelementseitigen Kanalabschnitt (22), der sich ausgehend von der Druckkammeranordnung (20) in dem Spannelement (5) erstreckt und in einen zwischen dem Spannelement (5) und dem Grundkörper (2) ausgebildeten Zwischenraum (23) mündet, und einen grundkörperseitigen Kanalabschnitt (24) aufweist, der sich ausgehend von dem Zwischenraum (23) in den Grundkörper (2) in Richtung der Spannmittel erstreckt.

11. Dehnspanneinrichtung (1) nach Anspruch 10, **dadurch gekennzeichnet, dass** der spannelementseitige Kanalabschnitt (22) und/oder der grundkörperseitige Kanalabschnitt (24) durch sich in Längsrichtung erstreckende Bohrungen gebildet sind, und/oder dass der Zwischenraum (23) radial und/oder axial zwischen den beiden Gewindeverbindungen (6, 7) ausgebildet ist, und/oder dass der Zwischenraum (23) ringförmig umlaufend zwischen dem Grundkörper (2) und dem Spannelement (5) ausgebildet ist.

12. Dehnspanneinrichtung (1) nach Anspruch 9 und Anspruch 7, **dadurch gekennzeichnet, dass** der Hydraulikmittelzuführkanal (21) im Grundkörper (2) ausgebildet ist und insbesondere schräg nach vorne in die Druckkammeranordnung (20) mündet.

13. Dehnspanneinrichtung (1) nach einem der vorherigen Ansprüche, **dadurch gekennzeichnet, dass** das Spannelement (5) und der Grundkörper (29) im Bereich ihrer Gewindeverbindungen (6, 7) stoffschlüssig, insbesondere durch eine Lötverbindung, bevorzugt durch eine Hochtemperatur-Lötverbindung, miteinander verbunden sind.

14. Dehnspanneinrichtung (1) nach Anspruch 13, **dadurch gekennzeichnet, dass** angrenzend an jede Gewindeverbindung (6, 7) im Grundkörper (2) oder im Spannelement (5) eine Ringnut (14, 15) ausgebildet ist, in der Lötmaterial, insbesondere CU-Lötmaterial, untergebracht ist.

15. Dehnspanneinrichtung (1) nach einem der vorherigen Ansprüche, **dadurch gekennzeichnet, dass** das Spannelement (5) mittels eines generativen Fertigungsverfahrens, insbesondere mittels selektiven Laserschmelzens, hergestellt ist, und/oder dass der Grundkörper (2) an seinem rückseitigen Endbereich eine Maschinenschnittstelle (3) zum Anbringen an der Spindel einer Werkzeugmaschine aufweist.
